Europäisches Patentamt

European Patent Office

Office européen des brevets

(19)

(11)  **EP 0 630 143 B1**

(12)  **EUROPÄISCHE PATENTSCHRIFT**

(45) Veröffentlichungstag und Bekanntmachung des
Hinweises auf die Patenterteilung:
**05.07.2000  Patentblatt 2000/27**

(51) Int. Cl.$^7$: **H04M 19/00**

(21) Anmeldenummer: **94106365.3**

(22) Anmeldetag: **23.04.1994**

(54)  **Schaltungsanordnung für die Speisung von digitalen Kommunikations-Endgeräten**

Feeding circuit arrangement for digital telecommunication terminals

Circuit pour l'alimentation des terminaux numériques de télécommunication

(84) Benannte Vertragsstaaten:
**AT BE CH DE DK ES FR GB GR IE IT LI LU NL PT
SE**

(30) Priorität: **16.06.1993 DE 4320608**

(43) Veröffentlichungstag der Anmeldung:
**21.12.1994  Patentblatt 1994/51**

(73) Patentinhaber:
**DeTeWe - Deutsche Telephonwerke
Aktiengesellchaft & Co.
10997 Berlin (DE)**

(72) Erfinder: **Neuhaus, Hans-Jürgen
D-12161 Berlin (DE)**

(74) Vertreter:
**Baumgärtel, Gunnar et al
Patentanwälte Maikowski & Ninnemann,
Xantener Strasse 10
10707 Berlin (DE)**

(56) Entgegenhaltungen:
**EP-A- 0 248 177**

- **PATENT ABSTRACTS OF JAPAN vol. 6, no. 91
(E-109) (969) 28. Mai 1982 & JP-A-57 025 766
(FUJITSU K.K.) 10. Februar 1982**
- **TELECOMMUNICATION SWITCHING - SESSION
33B PAPER 2 -, 7. Mai 1984, FLORENCE, ITALY
Seiten 1 - 5 M. SILIGONI ET AL. 'A new design of
SLIC with self-balancing network'**

**Beschreibung**

Die Erfindung betrifft eine Schaltungsanordnung für die Speisung von digitalen Kommunikations-Endgeräten über eine übertragerlose physikalische Schnittstelle, die der gleichzeitigen Übertragung von Daten in beiden Richtungen auf einer zweiadrigen Kupferleitung dient.

Beim digitalen Nachrichtennetz, z.B. dem diensteintegrierenden digitalen Nachrichtennetz (ISDN), sind zwischen der digitalen Vermittlung und dem Teilnehmeranschluß physikalische Schnittstellen vorgesehen. Diese Benutzer-Netz-Schnittstellen zwischen der digitalen Vermittlung und einem Teilnehmeranschluß (2-Draht-Schnittstelle, $U_{P0}$-Schnittstelle), dienen auch der Energieübertragung an die Teilnehmeranschlüsse. Hierzu sind zwei Zusatzadern vorgesehen, oder die Speisung wird über die Adern übertragen, die auch der Informationsübertragung dienen. Im letzten Fall sind Phantomschaltungen für die Speisung vorhanden. ( P. Bocker : ISDN, Das diensteintegrierende digitale Nachrichtennetz, Springer-Verlag, 1986, S. 75 ).

Für die Phantomschaltungen werden Übertrager verwendet, die relativ unwirtschaftlich hinsichtlich des Raumbedarfes und des finanziellen Aufwandes gegenüber anderen elektrischen Bauelementen sind.

Es ist bekannt, diese Übertrager durch elektronische Speisedrosseln und Pegelanpaßschaltungen zu ersetzen (DE - 41 33 682 vom 07.04.94), wie auch durch eine andere elektronische Schaltung, die jeweils aus vier parallel geschalteten Widerständen, einem Transistor und einem Verstärker je Ader einer zweiadrigen Kupferleitung besteht { Patent Abstract of Japan, Vol. 6, Nr. 91 (E-109) [969], 28.05.82 & JP-A-57 025 766 }.

Der Erfindung lag die Aufgabe zugrunde, die elektronischen Speisedrosseln durch noch einfachere Mittel zu ersetzen.

Diese Aufgabe ist durch die Erfindung gelöst, wie sie im Kennzeichnungsteil des ersten Patentanspruches dargelegt ist.

Die Erfindung schlägt prinzipiell vor, die bekannte Phantomspeisung bei Endgeräten mit niedrigem Energiebedarf durch eine reelle Widerstandsspeisung zu ersetzen, die Signale kapazitiv auszukoppeln und eine Pegelanpassung vorzunehmen.

Nachfolgend wird die Erfindung anhand einer aus zwei Schaltungsskizzen bestehenden Zeichnung näher erläutert. Darin zeigen die

Fig. 1　　eine symmetrische Zweidraht-Schnittstellenanordnung und die

Fig. 2　　eine asymmetrische Zweidraht-Schnittstellenanordnung.

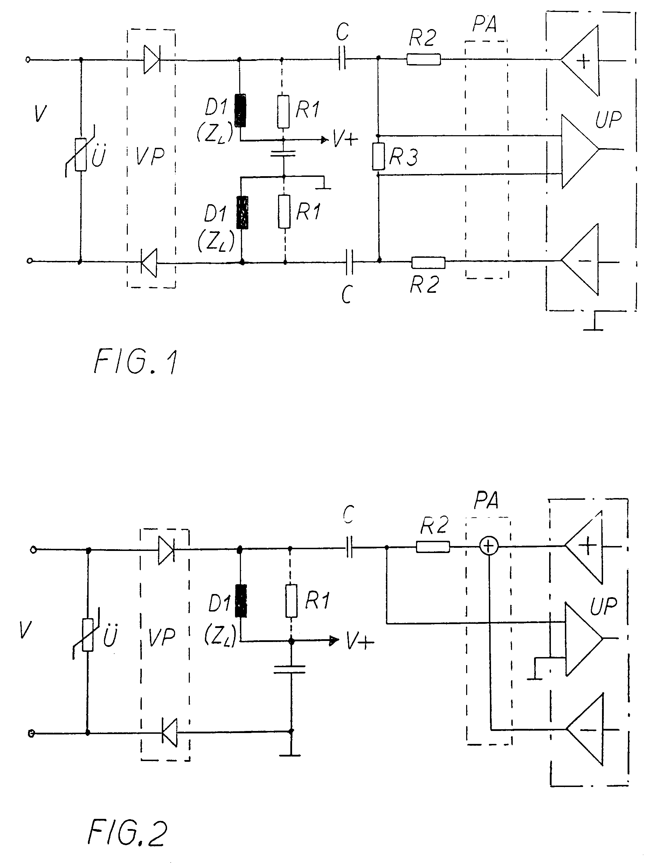

Die digitale Zweidraht-Schnittstelle dient der Übertragung digitaler Daten gleichzeitig in beiden Richtungen über vorhandene Zweidraht-Leitungen. In der symmetrischen Anordnung nach der Fig. 1 wird die Speisung über die Speisedrosseln D1 ausgekoppelt. Drosseln (Induktivitäten) weisen bei einem relativ hohen, frequenzabhängigen Wechselstromwiderstand einen geringen Gleichstromwiderstand auf. Sie bilden somit, je nach Dimensionierung und Ausführung, eine relativ geringe Last $Z_L$ für die Signalübertragung. Da bei digitalen Zweidraht-Schnittstellen einerseits hohe Baudraten (Grenzfrequenzen) üblich sind und andererseits relativ niedrige Signalabschlußwiderstände, z. B. typisch 100 Ohm, benötigt werden, können Drosseln mit relativ niedrigen Induktivitätswerten verwendet werden. Hierbei sind anstelle aufwendiger Drosseln, die außer einem Kern unter Umständen auch zusätzlich einen Luftspalt aufweisen können, auch wirtschaftlichere Luftdrosseln kleiner Bauart zur Speisung einsetzbar.

Wird nur eine niedrige Speiseleistung benötigt, können die Speisedrosseln D1 auf Kosten der Verlustleistung durch einfache reelle Widerstände R1 ersetzt werden.

Die Signalein- und -auskopplungen zur Datenübertragung werden über die Kondensatoren C vorgenommen, die auch die galvanische Trennung zu den Speisepotentialen bewirken. Anpassungswiderstände R2, R3 dienen im Zusammenhang mit den Drosselimpedanzen $Z_L$ der Anpassung an die zu realisierende Impedanz Z. Bei Vernachlässigung der realen Ausgangs- bzw. Eingangsimpedanz des Sende- bzw. Empfangsverstärkers des Schnittstellen-Bausteines UP und bei vernachlässigbaren Verlusten über die Kondensatoren C sowie über den Verpolungsschutz VP ergibt sich für die Eingangs-Impedanz Z

$$Z = 2 \cdot Z_L \,//\, 2 \cdot R2 \,//\, R3,$$

worin das Zeichen // die Parallelschaltung der Impedanzen bedeutet, gesehen von dem Schnittstellenanschluß V. Mit dem Widerstand R3 kann der Pegel in Senderichtung angepaßt werden. Bei Ersatz der Drosseln D1 durch reelle Widerstände R1 ergibt sich für die Ein-gangsimpedanz mit den genannten Vernachlässigun-gen:

$$Z = 2 \cdot R1 \,//\, 2 \cdot R2.$$

Der Widerstand R3 kann entfallen, da eine Pegelanpassung durch das Verhältnis der Widerstände R1, R2 geschieht. Um die Verluste gering zu halten, sind die Werte der Speisewiderstände R1 möglichst klein zu wählen.

Die Abstimmung zwischen der Impedanz Z, den Speiseimpedanzen $Z_L$ bzw. R1 und den Pegelverhältnissen des Schnittstellen-Bausteines UP kann bei Bedarf durch entsprechende Pegelanpaßschaltungen PA in Sende- wie in Empfangsrichtung optimiert werden.

Prinzipiell ist die Zweidraht-Schnittstelle eines Endgerätes auch asymmetrisch ausführbar, wie in Fig. 2 dargestellt. Die Funktion und die Dimensionierung der einzelnen Bauelemente entspricht denen der symmetrischen Anordnung nach der Fig. 1. Für die Eingangsimpedanz ergibt sich mit den genannten Vernachlässigungen

$$Z = Z_L \text{ // } R2 \text{ bzw.}$$

$$Z = R1 \text{ // } R2.$$

Bei Bedarf ist die Schnittstelle der Endeinrichtung mit einem Verpolungsschutz VP auszustatten. Weiterhin ist bei Endeinrichtungen, die beispielsweise über Freileitungen miteinander verbunden sind, ein Überspannungsschutz Ü am Eingang der Endeinrichtung als Blitzschutz vorzusehen.

## Patentansprüche

1. Schaltungsanordnung für die Speisung von digitalen Kommunikations-Endgeräten mit niedrigem Energiebedarf über eine übertragerlose physikalische Schnittstelle, die die gleichzeitige Übertragung von Daten in beiden Richtungen auf einer zweiadrigen Kupferleitung ermöglicht, dadurch gekennzeichnet, daß anstelle einer bekannten diskreten Drosselspeisung (D1) reelle Speisewiderstände (R1) kleinen Widerstandswertes vorgesehen werden, die parallel zu Anpassungswiderständen (R2, R3) geschaltet sind, daß die Signalein- und -auskopplungen zur Datenübertragung über zwischen den Speisewiderständen (R1) und den Anpassungswiderständen (R2, R3) geschaltete Kondensatoren (C) vorgenommen werden und daß eine Pegelanpassung (PA) vorgesehen wird.

## Claims

1. Circuit arrangement for supplying low energy requirement digital communications terminals via a transformer-free physical interface, which facilitates the simultaneous transmission of data in both directions on a copper, dual-core cable characterised in that instead of a known, discrete throttle feed (D1) real feed resistors (R1) of small resistance value are provided, which are connected in parallel with adaptation resistors (R2, R3), wherein the signal in-coupling and out-coupling for data transmission are performed via condensers (C) connected between the feed resistors (R1) and the adaptation resistors (R2, R3), and wherein a level recorder adaptation (PA) is provided.

## Revendications

1. Montage pour l'alimentation de terminaux numériques de communication possédant un faible besoin en énergie, par l'intermédiaire d'une interface physique sans transformateur, qui permet la transmission simultanée de données dans les deux directions dans une ligne bifilaire en cuivre, caractérisé en ce qu'à la place d'une alimentation à bobine de réactance discrète connue (D1), il est prévu des résistances réelles d'alimentation (R1) ayant une faible valeur résistive et qui sont branchées en parallèle avec des résistances d'adaptation (R2,R3), que les entrées et des couplages de signaux pour la transmission de signaux sont réalisés par l'intermédiaire de condensateurs (C) branchés entre les résistances d'alimentation (R1) et les résistances d'adaptation (R2,R3) et qu'il est prévu une unité d'adaptation de niveau (PA).

FIG.1

FIG.2

4